# EUROPEAN PATENT APPLICATION

(11) **EP 3 473 321 A1**
(43) Date of publication of application: **24.04.2019**
(21) Application number: 17197769.7
(22) Date of filing: 23.10.2017
(51) Int. Cl.: B01D 46/00, B01D 46/24, B01D 46/52

(54) **FILTER SYSTEM HAVING A FILTER ELEMENT AND FILTER ELEMENT FOR SUCH A FILTER SYSTEM**

(71) Applicant: MANN+HUMMEL GmbH, 71636 Ludwigsburg (DE)
(72) Inventor: Aragbatagangapa Eswarapa, Suresh, 560073 Bangalore (IN); Antomon, Chowalloor Rapheal, 560058 Bangalore (IN); Savanur Raghavendra Rao, Srikanth, 560085 Bangalore (IN)
(74) Representative: Nickolaus, Mathias

(57) **Abstract**

The invention relates to a filter element (10) for filtering a fluid, comprising a filter body (18) comprising a filter medium (16) arranged about a longitudinal axis (20), the filter medium (16) separating a clean side from a raw side of the filter body (18); end caps (12, 14) arranged at each of a front face of the filter body (18); a jacket (50) surrounding the outer shell of the filter body (16), the jacket (50) comprising a perforated segment (54) and at least one orifice (60, 70) at an axial end section of the jacket (50) for discharging particulate matter from the filter body (18); wherein the jacket (50) is connected to at least one of the end caps (12, 14).

The invention relates to a filter system (100) comprising such a filter element (10).

## Description

### Technical Field

The invention relates to a filter system having a filter element and a filter element for such a filter system, in particular for an air filter system of an internal combustion engine.

### Prior Art

It is known to use air filters in order to control combustion intake air for internal combustion engines in passenger vehicles, commercial vehicles, work machines, agricultural vehicles, but also stationary generators and the like. Such air filters generally comprise a housing, an air inlet, and an air outlet, with a removable and replaceable main or primary filter element disposed within the housing. The housing often includes a maintenance cover for access to the filter element inside the housing during maintenance. For this purpose, the filter element can be removed and either replaced by a new filter element, overtaken and reused, or replaced by a previously used, but overtaken filter element.

The filter elements of air filters are usually replaced after a certain operating time. Depending on the dust load on the filter element during usage, the service life of a filter element can be several days, for example when used in construction machines, up to several months in a less dusty environment.

It is known in the art to arrange elements at the outside of the primary filter element, in particular when the filter elements are subject to heavy duty. For instance, WO 9912629 A1 discloses to retain a sleeve of a thin-walled pleated filter medium at its outer perimeter by a filter medium netting. The thin-walled pleated filter medium is capped with upper and lower end-caps which seal the ends of the thin-walled pleated filter medium and act as a gasket for sealing with a filter housing.

### Disclosure of the Invention

It is an object of the invention to provide a filter element with improved stability.
It is a further object of the invention to provide a filter system comprising such a replaceable filter element.

The aforementioned object is achieved according to one aspect of the invention by a filter element for filtering a fluid, comprising a filter body, the filter body comprising a filter medium arranged about a longitudinal axis, the filter medium separating a clean side from a raw side of the filter body; end caps arranged at each of a front face of the filter body; a jacket surrounding the outer shell of the filter body, the jacket comprising a segment open to radial fluid flow, preferably a perforated segment, and at least one orifice at an axial end section of the jacket for discharging particulate matter from the filter body; wherein the jacket is connected to at least one of the end caps.

The aforementioned object is achieved according to another aspect of the invention by a filter system comprising such an inventive filter element.

Advantageous embodiments and advantages of the invention are described in the further claims, the description and the drawings.

According to a first aspect of the invention a filter element for filtering a fluid is proposed, comprising a filter body comprising a filter medium arranged about a longitudinal axis, the filter medium separating a clean side from a raw side of the filter body; end caps arranged at each of a front face of the filter body; a jacket surrounding the outer shell of the filter body, the jacket comprising a perforated segment and at least one orifice at an axial end section of the jacket for discharging particulate matter from the filter body; wherein the jacket is connected to at least one of the end caps.

The filter element preferably comprises a tubular filter body, preferably being oval or cylindrical. The filter body is preferably composed of a pleated filter medium. Preferably, the filter element comprises two end caps, either two open end caps or a first, closed end cap at one axial end face and an open end cap at the opposite end face.

Advantageously, the jacket is the outer shell of the filter element, the jacket being connected to the end cap in a stable manner. Preferably, the jacket may be embedded in one or both end caps. When removing the filter element from a housing for maintenance, the surface of the filter medium is preferably completely protected by the jacket against contact from hands or tools. Deformations due to water ingress into the filter medium or high forces while mounting or demounting the filter element can be avoided. Favorably, the perforated segment is configured to let the fluid pass through the jacket and block water droplets from entering the perforated segment. The perforations in the perforated segment may be inclined for easier discharge of water droplets of the perforations.

According to a favorable embodiment, the jacket may comprise a tapered segment at one or both axial end sections of the jacket, the tapered segment covering a cavity formed between the filter body and the tapered segment. Particulate matter may accumulate in the cavity. The cavity preferably provides a storage volume for the collected particulate matter. During maintenance, accumulated particulate matter may be removed from the cavity.

According to a favorable embodiment, the at least one orifice may be arranged at least in axial direction between an axial end of the jacket, especially a tapered segment at the axial end, and the respective end cap of the filter body, in particular the at least one orifice being an annular orifice arranged about the respective end cap. Jackets with a tapered segment and annular orifice at one or both end sections can be manufactured easily. Preferably, the at least one orifice may have a ring-shaped form defined by a gap between an edge of the jacket and an outer edge or surface of an end cap located adjacent the edge of the jacket. More preferably, the at least one orifice may have a ring shaped form defined by a gap between a ring-shaped edge at the axial end of the jacket on one side and an outer ring shaped edge or surface of an end cap located adjacent the ring-shaped edge of the jacket. Preferably, the tapered segment is configured to increase in diameter in direction to the axial end such that the jacket has a diameter at the end of the tapered segment that is greater than the outer diameter of the adjacent end cap. Preferably, the tapered segment is configured to increase in diameter in direction to the axial end such that the jacket has an inner diameter at the end of the tapered segment that is greater than the outer diameter of the adjacent end cap. In this way, a gap in axial and/or radial direction can be provided as the at least one orifice. The tapered segment is preferably a closed (non-perforated) segment or part of a closed segment closed to radial flow through the jacket.

According to a favorable embodiment, the perforated segment may comprise sloped holes which are inclined with respect to a perpendicular to the axis. Water can flow out of the holes onto the outer shell of the jacket, thus preventing flooding of the filter medium inside the jacket. Also, water droplets or aerosols may collide with the sloped wall of the holes with higher probability which can help to protect the filter media.

According to a favorable embodiment, the jacket may have a conical shape with a diameter at one end section being smaller than the diameter at the opposing end section, in particular wherein half of a conus angle of the conical shape is less than 10°, preferably less than 5°. Preferably, the diameter of the jacket increases toward the tapered segment of the jacket. Multiple jackets can easily be stacked in a space saving manner. The conicity of the jacket allows for an economic storage and transport of jackets.

According to a favorable embodiment, the jacket may provide a perforated ring section at one or two of its axial end sections, preferably projecting axially beyond and/or inwardly from the axial end of a closed section of the jacket, especially from the axial end of a tapered segment, the ring section being embedded in the respective end cap.

According to a favorable embodiment, the perforated segment of the jacket may be in axial direction arranged between two non-perforated segments. Advantageously, a fluid inlet may be arranged close to an end cap of the filter element so that fluid entering the housing flows tangentially with respect to the filter element close to the fluid inlet. The non-perforated segment of the jacket in this region can serve as a flow shield against impinging fluid flow. An additional flow shield can be avoided. The non-perforated segment at the other side of the filter element can be followed by the tapered segment in axial direction.

According to a favorable embodiment, a perforated ring section of the jacket may extend beyond the tapered segment in axial direction. This allows to embed the jacket safely into the end cap. The end cap may preferably be composed of polyurethane. Polyurethane can penetrate the perforations of the perforated ring sections, thus anchoring the jacket in one or both of the end caps.

According to a favorable embodiment, the jacket may be provided at one front face (axial end face) of the filter element with one or more brackets for anchoring the jacket in the respective end cap. The brackets may have legs pointing radially inward. Molded polyurethane, preferably foamed polyurethane, as material for the end caps can embed the brackets, thus providing a high stability for the end cap and jacket.

According to a favorable embodiment, the jacket may be provided with a tapered segment at both ends. The filter element can be mounted in a poka yoke manner.

According to a further aspect of the invention, a filter system is proposed comprising a housing, a fluid inlet formed in a housing wall, a fluid outlet formed in a housing wall, an exchangeable filter element for filtering a fluid being accommodated in the housing, wherein the filter element comprises a filter body comprising a filter medium arranged about a longitudinal axis, the filter medium separating a clean side from a raw side of the filter body. The filter element further comprises end caps arranged at each of a front face of the filter body, a jacket surrounding the outer shell of the filter body, the jacket comprising a perforated segment and at least one orifice at an axial end section of the jacket for discharging particulate matter from the filter body. The jacket is connected to at least one of the end caps. The filter system may be provided with means for producing a temporary gas flow from the inside to the outside of the filter element, for example an inlet for pressured air connected to the inside of the filter element. This gas flow may be used to transport particles held in the outer surface of the filter medium into the space between filter body and jacket. Those particles then can be transported out of this space by gravity, especially through the at least one orifice, while most of or at least a significant amount of the particles removed from the filter media will remain within the jacket, and not be transported to the raw side space outside the jacket.

Advantageously, because the jacket is the outer shell of the filter element, when removing the filter element from a housing for maintenance, the surface of the filter medium is completely protected by the jacket against contact from hands or tools. Deformations due to water ingress into the filter medium or high forces while mounting or demounting the filter element can be avoided. Favorably, the perforated segment is configured to let the fluid pass through the jacket and block water droplets from entering the perforated segment. The perforations in the perforated segment may be inclined for easier discharge of water droplets of the perforations. The filter system is preferably suited for heavy duty operation.

According to a preferable embodiment, the filter system is adapted to being used in a non-horizontal orientation, wherein the filter system is mounted in an orientation in which at least one orifice of the filter element points downwardly such that particles can be transported out of the jacket and/or the orifice by gravity. According to a favorable embodiment the filter system is used in vertical orientation such that the center axis of the filter housing and/or the filter element are in vertical orientation.

According to a favorable embodiment, the filter element may comprise a tapered segment at one or both axial end sections of the jacket, the tapered segment covering a cavity formed between the filter medium and the tapered segment. The cavity allows for accumulating particulate matter which can be removed from time to time during maintenance of the filter system.

According to a favorable embodiment, one tapered section may be arranged at the end section in a distance from the inlet in the housing. Particulate matter can move along the longitudinal extension of the jacket and, hence, the filter element to accumulate at the end section.

According to a favorable embodiment, the jacket may extend in axial direction along the axis having a conical shape with a diameter at one end section being smaller than the diameter at the opposing end section, in particular wherein half of a conus angle β of the conical shape may be less than 10°, preferably less than 5°. Preferably, the diameter of the jacket increases toward the tapered segment of the jacket. Besides the possibility to stack the jackets providing a space saving way of storing and transporting the jackets, particulate matter can easily move in the clearance between jacket and filter body and accumulate in the tapered segment.

### Brief Description of the Drawings

Further advantages result from the following drawing description. Embodiments of the invention are shown in the drawings. The drawings, the description, and claims contain numerous features in combination. The person skilled in the art will expediently also consider the features individually and combine them into sensible further combinations. For example,
- Fig. 1: shows an isometric view with a partially longitudinal cut view of a filter system with a filter element according to an embodiment of the invention;
- Fig. 2: shows the filter system of Fig. 1 in a longitudinal cut view;
- Fig. 3: shows a partially longitudinal cut view of a first embodiment of a filter element with a jacket having a tapered segment at one side;
- Fig. 4: shows the jacket of the filter element shown in Fig. 3, partially cut open;
- Fig. 5: shows a longitudinal cut view of the jacket shown in Fig. 4;
- Fig. 6: shows in a longitudinal cut view an alternative embodiment of a jacket having tapered segments at both ends.

### Detailed Description of the Drawings

In the drawings, like elements are referred to with equal reference numerals. The drawings are merely schematic representations, not intended to portray specific parameters of the invention. Moreover, the drawings are intended to depict only typical embodiments of the invention and therefore should not be considered as limiting the scope of the invention.

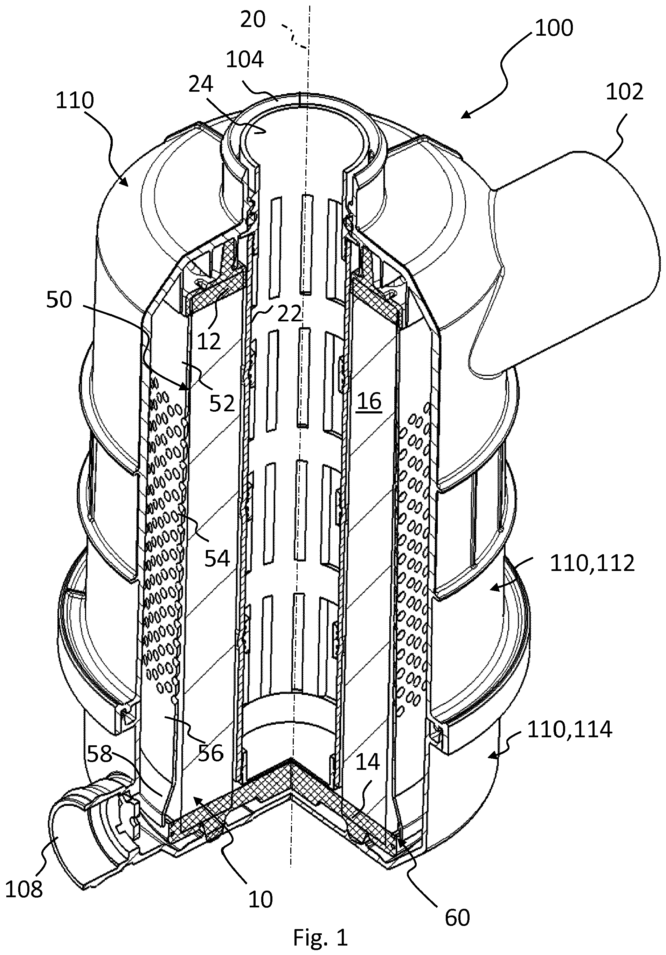

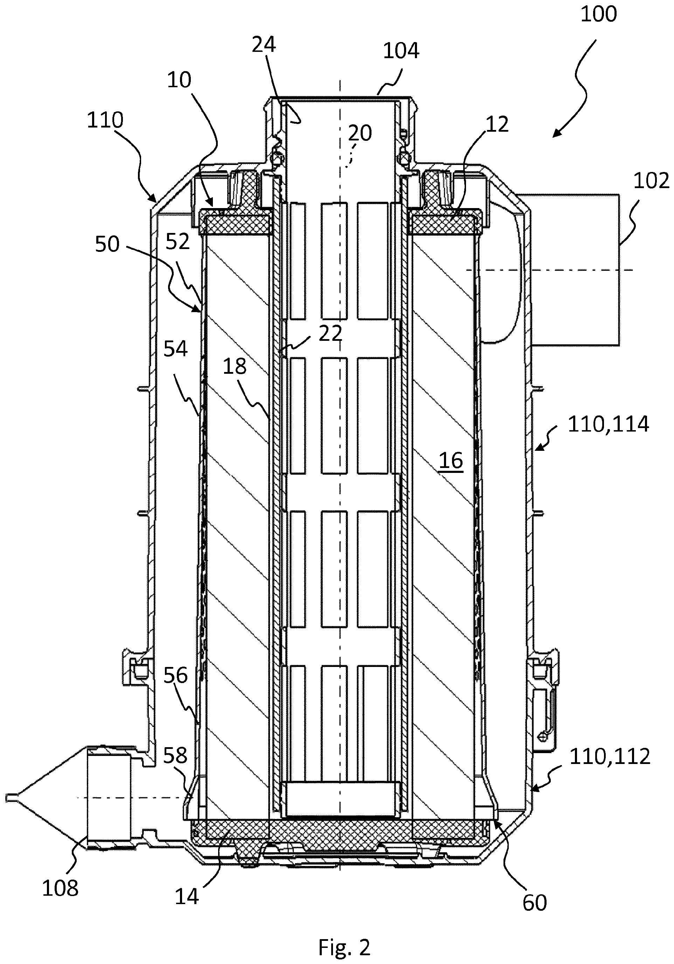

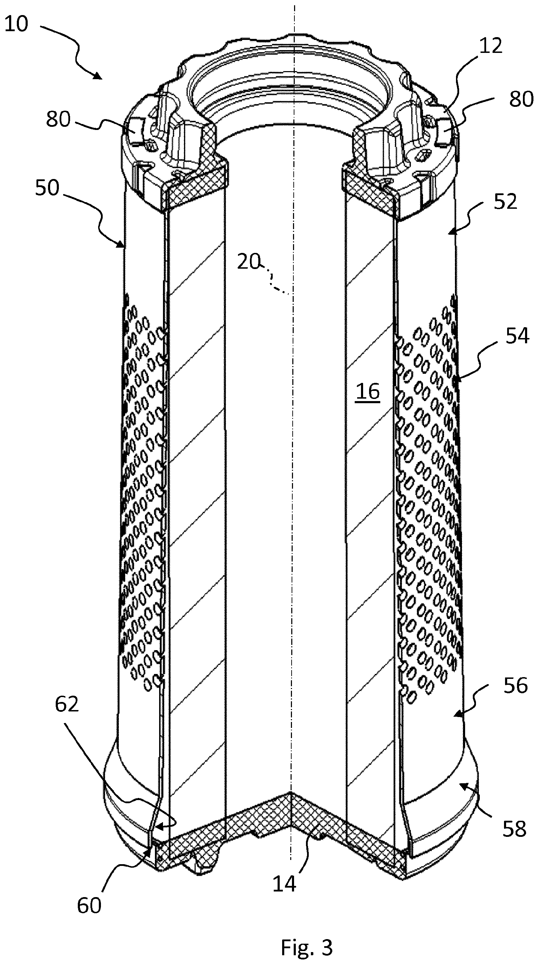

Figure 1 shows an isometric view with a partially longitudinal cut view of a filter system 100 with a filter element 10 according to an embodiment of the invention. Figure 2 shows the filter system 100 of Fig. 1 in a longitudinal cut view. Figure 3 shows the filter element 10 in a partially cut view in more detail.

The filter system 100 comprises a housing 110 which accommodates the filter element 10. A fluid inlet 102 is formed in a first housing wall 112 and a fluid outlet 104 is formed in a second housing wall 114. Both housing walls 112, 114 are connected by a clamp or the like which can be removed in order to access the filter element 10 by removing the second housing wall 114. At one end the filter element 10 is provided with a closed end cap 14, while the axially opposing end cap 12 is an open, ring shaped end cap with a central flow opening.

The filter element 10 comprises a cylindrical filter body 18. The filter body 18 is composed of a filter medium 16 arranged about a longitudinal axis 20. Preferably, the filter medium 18 is a pleated filter medium 16. Inside the filter element 10 a secondary filter element 22 may be arranged, for example on a stand pipe 24. The filter medium 16 separates a clean side from a raw side of the filter body 18. The stand pipe 24 has a closed end cap at the same side where the closed end cap 14 is arranged. When the second housing wall 114 is removed, the filter element 10 can be demounted with the clean side being still protected by the secondary filter element 22. The secondary filter element 22 is preferably made of a single or multilayer filter medium wound about the stand pipe 24.

A fluid enters the housing 110 through the inlet 102 and flows radially through the filter element 10. The inside of the stand pipe 24 merges with the fluid outlet 104 at the open ended end cap 12 of the filter element. Fluid inlet 102 and fluid outlet 104 are arranged in the same housing part 112.

The filter element 10 comprises a jacket 50 surrounding the outer shell of the filter body 16. The jacket 50 comprises, in subsequent order along the longitudinal axis 20, a non-perforated segment 52, a perforated segment 54, a non-perforated segment 56 and a tapered segment 58.

The tapered segment 58 provides an annular orifice 60 at the axial end section with the closed end cap 14 of the filter element 10. The tapered segment 58 of the jacket 50 covers a cavity 62 formed between the filter medium 16 and the tapered segment 58. During operation of the filter element 10 particulate matter can accumulate in the cavity 62 and be removed through the orifice 60 during maintenance of the filter system 100.

The jacket 50 is rigidly connected to both of the end caps 12, 14. In particular the jacket 50 is embedded in the end caps 12, 14.

While particulate matter can be collected inside the jacket 50 in the cavity 62, water carried in the fluid when entering the housing 110 can be collected outside the jacket 50 and discharged from the housing 110 through a valve 108 at the bottom wall 112 of the housing 110.

As can be seen in Figure 3, the jacket 50 is embedded at both ends in the end caps 12, 14 which are preferably made of polyurethane. The tapered segment 58 is located at the side of the filter element 10 displaying the closed end cap 14 while at the side with the open end cap 12 the jacket 50 is provided with brackets 80. The brackets 80 are equipped with inwardly pointing legs which add up to an increased stability of the connection between jacket 50 and end cap 12 as well as an improves stability of the end cap 12.

The annular orifice 60 is arranged radially between the tapered segment 58 and the filter body 18.

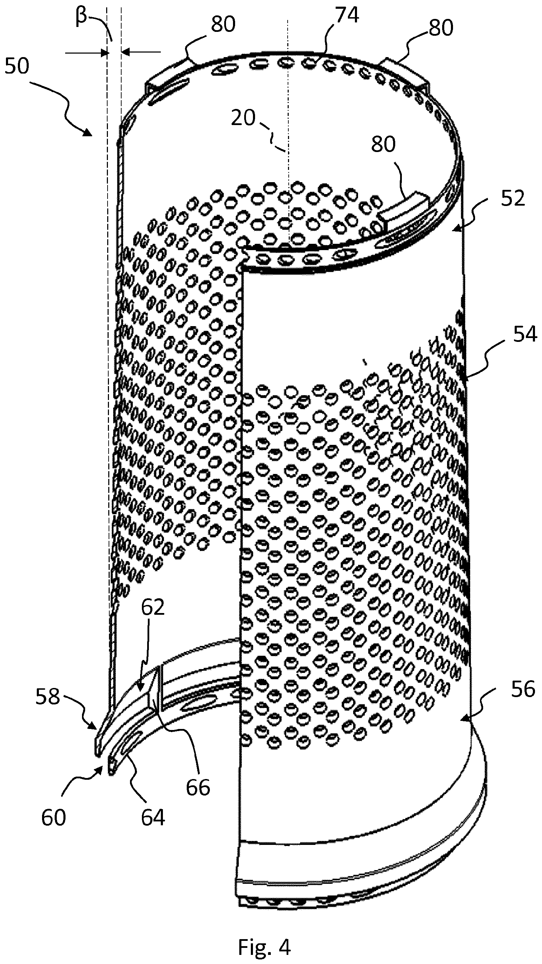

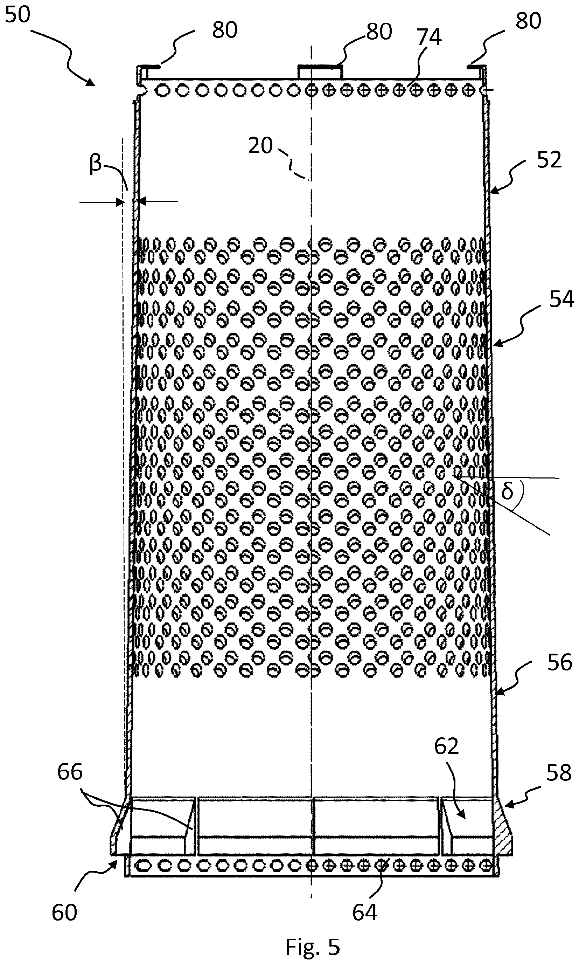

Figures 4 and 5 show the jacket 50 of the filter element 10 of Figure 3 with a partially cut open view in Figure 4 and a longitudinal cut view of the jacket 50 shown in Figure 5.

The jacket 50 extends in axial direction along the axis 20. The jacket 50 has a conical shape with a diameter at one end section, the one at the open end cap 12 being smaller than the diameter at the opposing end section, the one at the closed end cap 14 and orifice 60. The half of a conus angle β of the conical shape is less than 10°, preferably less than 5°.

The wall of the tapered segment 58 is supported by support elements 66 which are distributed along the circumference of the jacket 50 between the tapered segment 58 and a perforated ring shaped area 64. The perforated ring section 64 is intended for being embedded in the end cap 12. A perforated ring section 74 is provided at the opposite end of the jacket 50. Preferably, polyurethane is used for the manufacture of the end caps 12, 14. Polyurethane can penetrate the perforations of the perforated ring sections 64, 74 thus anchoring the jacket 50 safely in the end caps12, 14.

The perforated segment 54 of the jacket 50 has perforations which are inclined with respect to the surface normal at the location of each perforation. In particular, the perforations are arranged sloping down by an angle δ in regard to a perpendicular to the axis 20 of the jacket 20 so that water entering perforations will flow out of the perforations at the outer shell of the jacket 50.

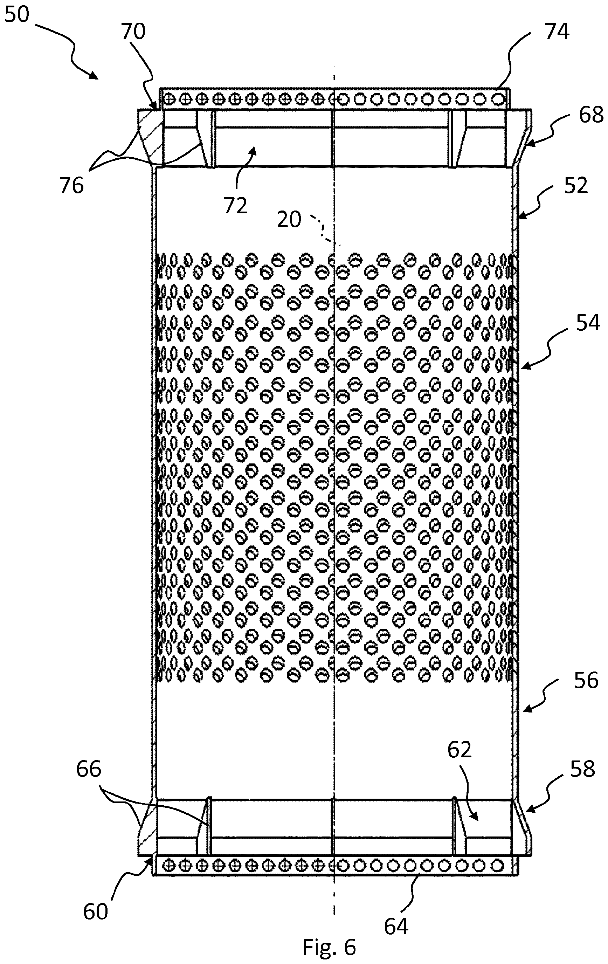

Figure 6 shows in a longitudinal cut view an alternative embodiment of a jacket 50 having tapered segments 58, 68 at both sides. In this case the jacket 50 has a conical shape. In the Figure, the walls of the tapered segments 58, 68 covering the annular cavities 62, 72 are removed to display the support elements 66, 76. A filter element 10 equipped with this jacket 50 has no preferred orientation concerning up or down. Particulate matter can be removed through either orifice 60, 70.

## Claims

1. A filter element (10) for filtering a fluid, comprising
a filter body (18) comprising a filter medium (16) arranged about a longitudinal axis (20), the filter medium (16) separating a clean side from a raw side of the filter body (18);
end caps (12, 14) arranged at each of a front face of the filter body (18),
a jacket (50) surrounding the outer shell of the filter body (16), the jacket (50) comprising a perforated segment (54) and at least one orifice (60, 70) at an axial end section of the jacket (50) for discharging particulate matter from the filter body (18),
wherein the jacket (50) is connected to at least one of the end caps (12, 14).

2. The filter element according to claim 1, the jacket (50) comprising a tapered segment (58, 68) at one or both axial end sections of the jacket (50), the tapered segment (58, 68) covering a cavity (62, 72) formed between the filter medium (16) and the tapered segment (58, 68).

3. The filter element according to claim 1 or 2, the at least one orifice (60, 70) being arranged at least in axial direction between the tapered segment (58, 68) and the respective end cap (12, 14) of the filter body (18), in particular the at least one orifice (60, 70) being an annular orifice arranged about the respective end cap (12, 14).

4. The filter element according to any of the preceding claims, the perforated segment (54) comprising sloped holes which are inclined with respect to a perpendicular to the axis (20).

5. The filter element according to any of the preceding claims, wherein the jacket (50) has a conical shape with a diameter at one end section being smaller than the diameter at the opposing end section, in particular wherein half of a conus angle (β) of the conical shape is less than 10°, preferably less than 5 °.

6. The filter element according to any of the preceding claims, the jacket (50) providing a perforated ring section (64, 74) at its axial end section, the ring section (64, 74) being embedded in the respective end cap (12, 14).

7. The filter element according to anyone of the preceding claims, wherein the perforated segment (54) of the jacket (50) is in axial direction arranged between two non-perforated segments (52, 56).

8. The filter element according to anyone of the preceding claims, wherein the perforated ring section (64, 74) of the jacket (50) extends beyond the tapered segment (58, 68) in axial direction.

9. The filter element according to anyone of the preceding claims, wherein the jacket (50) is provided at one front face with one or more brackets (80) for anchoring the jacket (50) in the respective end cap (12).

10. The filter element according to anyone of the preceding claims, wherein the jacket (50) is provided at both ends with a tapered segment (58, 68).

11. A filter system (100) comprising a housing (110), a fluid inlet (102) formed in a housing wall (112), a fluid outlet (104) formed in a housing wall (114), an exchangeable filter element (10) for filtering a fluid, in particular according to anyone of the preceding claims, being accommodated in the housing (110), wherein the filter element (10) comprises
a filter body (18) comprising a filter medium (16) arranged about a longitudinal axis (20), the filter medium (16) separating a clean side from a raw side of the filter body (18);
end caps (12, 14) arranged at each of a front face of the filter body (18),
a jacket (50) surrounding the outer shell of the filter body (16), the jacket (50) comprising a perforated segment (54) and at least one orifice (60, 70) at an axial end section of the jacket (50) for discharging particulate matter from the filter body (18),
wherein the jacket (50) is connected to at least one of the end caps (12, 14).

12. The filter system according to claim 11, wherein the jacket (50) comprises a tapered segment (58, 68) at one or both axial end sections of the jacket (50), the tapered segment (58, 68) covering a cavity (62, 72) formed between the filter medium (16) and the tapered segment (58, 68).

13. The filter system according to claim 12, wherein one tapered section (58) is arranged at the end section in a distance from the inlet (102) in the housing (110).

14. The filter system according to anyone of the claims 11 to 13, wherein the jacket (50) extends in axial direction along the axis (20) having a conical shape with a diameter at one end section being smaller than the diameter at the opposing end section, in particular wherein half of a conus angle (β) of the conical shape is less than 10°, preferably less than 5°.
